# EUROPEAN PATENT SPECIFICATION

(11) **EP 1 734 772 B1**
(45) Date of publication and mention of the grant of the patent: **09.03.2011**
(21) Application number: 05783904.5
(22) Date of filing: 05.09.2005
(51) Int. Cl.: H04W 4/06

(54) **METHOD OF UPLINK PREEMPTION BY LATER ENTRY USER EQUIPMENT IN TRUNKING GROUP WITH ESTABLISHED GROUP CALL**
VERFAHREN FÜR EIN BENUTZERENDGERÄT ZUR AUFNAHME IN EIN BESTEHENDES GRUPPENGESPRÄCH MIT PREEMTIVER BELEGUNG DES AUFWÄRTSKANALS
PROCEDE PERMETTANT A L'UTILISATEUR QUI ENTRE DANS UNE COMMUNICATION DE GROUPE PREALABLEMENT ETABLIE D'OCCUPER LA LIAISON MONTANTE

(30) Priority: 18.04.2005 CN 200510064733
(43) Date of publication of application: 20.12.2006
(73) Proprietor: Huawei Technologies Co., Ltd., Longgang District, Shenzhen Guangdong 518129 (CN)
(72) Inventor: CHEN, De, Shenzen, Guangdong 518129 (CN); LIU, Guang, Shenzen, Guangdong 518129 (CN)
(74) Representative: Reinhard - Skuhra - Weise & Partner GbR
(86) International application number: PCT/CN2005/001408
(87) International publication number: WO 2006/111052

(56) References cited:
- CN-A- 1 596 006
- CN-A- 1 599 472
- JP-A- 11 313 159
- US-A1- 2004 077 358
- "Digital cellular telecommunications system (Phase 2+)" ETSI STANDARDS, EUROPEAN TELECOMMUNICATIONS STANDARDS INSTITUTE, SOPHIA-ANTIPO, FR, vol. 3-CN1, no. V640, March 2005 (2005-03), XP014028292 ISSN: 0000-0001

## Description

### Field of the invention

The present invention relates to the technique of uplink preemption for talking in a trunking radio communication system, and particularly, to a method of uplink preemption by later entry User Equipment (UE) in a trunking group in which a group call has already been established.

### Background of the invention

A trunking radio communication system hereinafter referred to as a trunking system, is an economic, flexible communication system for commanding and scheduling developed in recent years. It is widely applied in government organizations, energy and transportation enterprises, airports, harbors, fire-fighting police units, water conservancy facilities and military, for satisfying needs of internal communications and liaison of various corporations.

A primary service provided by the trunking system is a Voice Group Call Service (VGCS). The VGCS allows a UE to establish calls with a plurality of UEs who belong to a given service area and have the same group ID in the trunking group, wherein the service area includes at least one cells. The VGCS operates in half-duplex mode. During a call, any UE in the trunking group can be a talker, but only one UE is allowed to talk at one moment while other members of the trunking group are listeners.

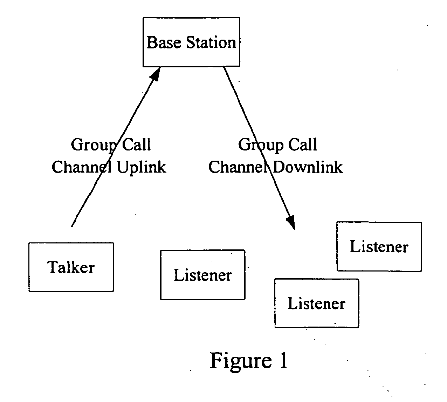

Figure 1 is a schematic diagram illustrating a procedure of a group call in the prior art. All the UEs in a trunking group belong to one base station. A pair of group call channels uplink and downlink is assigned to the UEs in the trunking group when the trunking group establishes a group call. One of the UEs in the trunking group talks as the current talker in a group transmit mode on the group call channel uplink, and other UEs in the trunking group listen to the talker as listeners in group receive mode on the group call channel downlink. The current talker may also talk in other uplinks assigned by the network side in the trunking group; the network side in the trunking group hereinafter is shortened as network side.

Description messages of a group call channel are transferred on the downlink, e.g. a Notification Channel (NCH). An uplink busy message is sent once after the network side has assigned an uplink for the talker, and an uplink free message is sent repeatedly by the network side while the uplink for talking is free, wherein the time interval between the repeated messages can be pre-defined by the network side.

After the voice group call is established, in some cases, e.g., the UE switches on thereafter, the UE enters the group call area of the trunking group thereafter, and the UE reenters initiatively after leaving the trunking group, the UE in said cases is referred to as a later entry UE.

After a later entry UE enters a trunking group with an established group call, there are two situations for the trunking group: First, no UE is talking, i.e., the uplink for talking is free; second, a UE is talking, i.e., the uplink for talking is busy. If no UE is talking, the network side will repeatedly send an uplink free message on the downlink so as to inform the later entry UE that the uplink is free and that he can send an uplink access request. If a UE is talking, no message will be sent except an uplink busy message, which is sent once after the network side assigned the uplink for the talker, and in this case, the later entry UE can not receive the uplink busy message because it enters the trunking group later. Instead, the UE will determine that the uplink is busy, if it does not receive the uplink free message within the pre-defined time interval. Then, the UE demodulates the group call channel downlink and listens to the voice sent on it.

Similarly, after the later entry UE sends the uplink access request, the network side responds to the uplink access request, and assigns the uplink to the UE for talking. And then the network side sends once an uplink busy message on the downlink. After receiving the uplink busy message, other UEs in the trunking group will demodulate the group call channel downlink for listening, and are not allowed to send uplink access requests until receiving an uplink free message from the network side.

The UEs in the trunking system may belong to different trunking groups, and may have different priorities in different groups. Within a trunking group, in order to render the following different service characteristics to different UEs, different priorities are configured for the different users, and are saved in the UEs:
1. The UEs with different priorities in a trunking group have different parameters configured during a random access, e.g. the repeated time intervals or times configured for transmission are different, etc. which lead to different success rates of access;
2. When the UEs with different priorities in a trunking group initiate the uplink access at the same time, the trunking system will determine to assign the uplink first for the UE with a higher priority, based on their priorities.
3. When a UE with a lower priority in the trunking group is talking on the uplink, the UEs with higher priorities can interrupt the talking of the UE with lower priority and talk by preempting the uplink.

For the implementation of the third characteristic above, the network side may as well send a message with a priority information of the talker while sending once the uplink busy message after assigning the talker the uplink, the message is referred to a information message thereafter. Such that other UEs in the trunking group can check, according to the priority information of the talker, whether its self-priority is higher than the talker's; if it is higher than the talker's, the uplink access request can be sent, and the network side will release the uplink occupied by the talker and assign the UE the uplink for talking; otherwise, the uplink access request can not be sent and the UE has to listen to the voice on the downlink.

After introducing the concept of priority to the trunking group, the method of uplink preemption by a later entry UE inherits that without priority, i.e., after the later entry UE enters the trunking group, if no uplink free message on the downlink is received, it will be determined that the current uplink has been occupied, the uplink access request can not be sent for preemption of the uplink. Then the later entry UE will demodulate the group call channel downlink and listen to the voice on the group call channel downlink. If receiving the uplink free message, the UE then determines that the current uplink is free and the uplink access request can be sent.

According to the prior art, after assigning the uplink for the UE who sends the uplink access request for talking, the network side will send once the information message to all the UEs currently in the trunking group on the downlink. Therefore, all the UEs currently in the trunking group can determine the priority of the current talker and whether its self-priority is higher than that of the current talker, and thereby determining whether to preempt the uplink. For a later entry UE, however, it is impossible, due to its later entry, to receive the information message which are sent once without receiving the uplink free message within the pre-defined time interval, and as a result, it is impossible for the later entry UE to know the priority of the current talker. Thus, even if the later entry UE has a higher priority, it can not send the uplink access request to the network side.

US 2004/077358 A1 discloses methods and systems for distributed arbitration in a push-to-talk communications system, wherein a server receives talk requests from user communications terminals in a push-to-talk communications system. The server generates state information based on the talk requests and delivers the state information to the user communications terminals. The user communications terminals execute a distributed arbitration algorithm to determine which user communications terminal should have possession of a communications channel among user communications terminals with simultaneously pending talk requests based on the state information.

### Summary of the invention

According to the prior art, the present invention is to provide a method of uplink preemption by a UE who enters a trunking group with an established group call later, such that when the later entry UE in the trunking group with an established group call has a higher priority, this UE can send an uplink access request to the network side and preempt the uplink.

The method for the later entry User Equipment, UE, in a trunking group with an established group call to preempt uplink in accordance with this invention, assigns different priorities for UEs in the trunking group, including:
after the uplink of the trunking group with an established group call is occupied by a UE as the talker, the trunking group sending a message with the priority information of the talker to the listeners, and the later entry UE enters the trunking group after the group call is established;
the later entry UE deciding according to the received message with the priority information of the talker whether its configured priority is higher than the talker's, if yes, determining that he can preempt the uplink; otherwise, demodulating the group call channel downlink assigned for the trunking group when the group call was established, and listening to the voice.

Wherein, the information message is sent repeatedly by the trunking group at a pre-defined time interval on the downlink.

The method further includes: the trunking group sends repeatedly an uplink busy message indicating the uplink is busy at the pre-defined time interval.

The method further includes: receiving (103), by the later entry UE, an uplink busy message indicating the uplink being busy, wherein the uplink busy message is sent repeatedly by the trunking group at the pre-defined time interval.

Wherein, the uplink busy message and the information message are sent in one downlink message.

Wherein, if the later entry UE does not receive the uplink free message, it sends an uplink message to the trunking group;
the trunking group, which receives the uplink message, sends the information message to the later entry UE on the downlink.

Wherein, before the later entry UE receives an information message with a priority information of the talker, further includes,
sending (205), by the later entry UE, an uplink message to the trunking group if the later entry UE does not receive a uplink free message;
wherein the information message is sent by the trunking group in response to the uplink message from the later entry UE.

Wherein, the uplink message carries the priority information configured for the later entry UE.

Before the trunking group sends the information message to the later entry UE, the method further includes:
determining according to the received priority information of the later entry UE whether the priority of this later entry UE is higher than that of the talker, if it is higher than that of the talker, releasing the uplink occupied by the talker and assigning the uplink for the later entry UE, otherwise, sending to the later entry UE the information message.

Before the later entry UE sends the uplink message to the trunking group, the method further includes:
determining whether its self-priority is the lowest in the trunking group;
if it is lowest, listening on the downlink; otherwise, sending the uplink message to the trunking group.

After the later entry UE determines the uplink can be preempted, the method further includes:
the later entry UE sending an uplink access request to the trunking group;
the trunking group releasing the uplink occupied by the talker after receiving the uplink access request,, and assigning the uplink to the later entry UE .

Wherein, the uplink access request carries the priority information configured for the later entry UE.

Before the trunking group releases the uplink occupied by the talker, the method further includes:
the trunking group determining according to the received priority information of the later entry UE carried by the uplink access request whether the priority of the later entry UE is higher than that of the talker, if it is higher than that of the talker, the trunking group releasing the uplink occupied by the talker; otherwise, the trunking group not respond to the uplink access request or sending an access failure message to the later entry UE.

Wherein, the downlink is a Notification Channel (NCH).

A trunking system is also provided for uplink preemption, including:
a plurality of UEs with different priorities, including a later entry UE in a trunking group with an established group call, one of the UE occupies an uplink of the trunking group with the established group call as a talker, other UEs including the later entry UE are listeners on the downlink;
the trunking group, which sends a information message with a priority information of the talker to the listener;
the later entry UE, which determines according to the information message with the priority information of the talker whether its self-priority is higher than that of the talker, if it is higher than that of the talker, it determines the uplink can be preempted; otherwise, it listens on the downlink; wherein the later entry UE enters the trunking group after the group call is established.

Wherein, the trunking group sends repeatedly an information message on the downlink at a pre-defined time interval.

If the later entry UE does not receive an uplink free message sent repeatedly by the trunking group within the pre-defined time, it sends an uplink message to the trunking group;
the trunking group, which receives the uplink message, sends the information message to the later entry UE on the downlink.

It can be seen from the above solution that, with the network side sending the information message to the later entry UE, it is possible that the later entry UE will not directly determine that he can not preempt the uplink without receiving the uplink free message, instead, the UE will further determines whether to preempts the uplink by comparing the priority of the talker with its own, and thereby determining whether to send to the network side an uplink access request. In order to make the later entry UE receive the information message, the network side may send the message repeatedly or on demand. In this way, the method provided by this invention makes the later entry UE to send an uplink access request to the network side and preempt the uplink when he has a higher priority.

### Brief description of the drawings

Figure 1 is a schematic diagram illustrating a group call procedure in the prior art;
Figure 2 is a flowchart illustrating the first embodiment of the method of uplink preemption by a later entry UE in a trunking group with an established group call in accordance with the present invention;
Figure 3 is a flowchart illustrating the second embodiment of the method of uplink preemption by a later entry UE in a trunking group with an established group call in accordance with the present invention.

### Detailed description of the invention

A description in detail is given hereinafter with reference to the specific embodiments and the accompanying drawings.

A priority of the current talker is informed in time to a later entry UE by sending repeatedly an information message with priority information of the talker. The later entry UE is a UE enters a trunking group with an established group call later. So that the later entry UE can make sure the priority of the current talker, and determines whether its self-priority is higher than that of the current talker, and accordingly, determines whether to preempt the uplink.

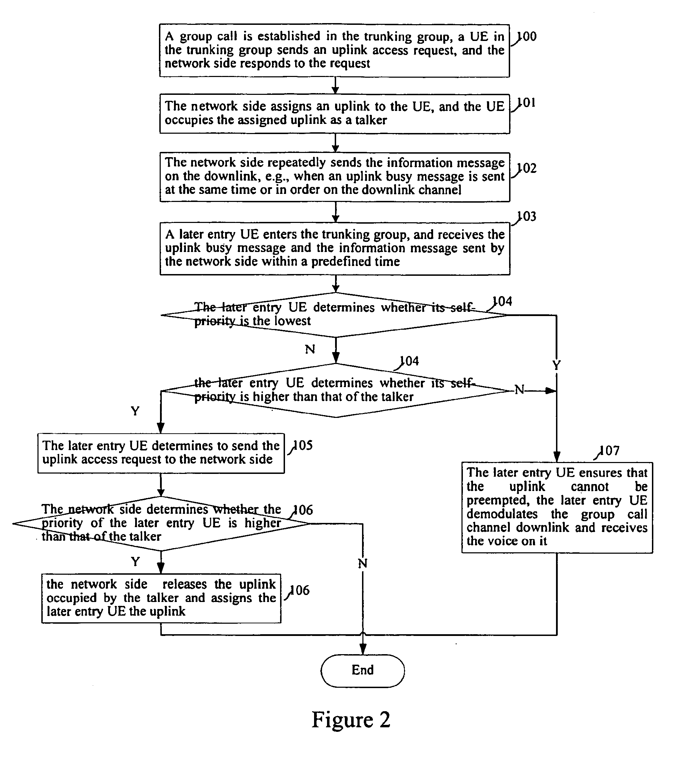

As shown in Figure 2, which is a flowchart of the first embodiment of the method of uplink preemption by later entry UE in accordance with the present invention, the detailed steps of the first embodiment comprise:
Step 100: A group call is established in the trunking group, a UE in the trunking group sends an uplink access request, and the network side responds to the request.
Step 101: The network side assigns an uplink to the UE, and the UE occupies the assigned uplink as a talker.
Step 102: The network side repeatedly sends the information message on the downlink, e.g., when an uplink busy message is sent at the same time or in order on a NCH.

The time interval of the repeated transmission can be pre-defined by the network side.

The uplink busy message and the information message can be one downlink message, or two downlink messages sent at the same time.

In accordance with the present embodiment, the information message can be repeatedly send only. The later entry UE can determine that the current uplink is occupied so long as the UE receives the information message.

Step 103: A later entry UE enters the trunking group, and receives the uplink busy message and the information message sent by the network side within a pre-defined time interval.

The time interval pre-defined by the later entry UE is usually equal to or longer than the time interval of the repeated transmission of the uplink busy message and the information message.

Step 104: The later entry UE determines whether its self-priority is the lowest, if it is the lowest, executes the step 107; otherwise, the later entry UE determines whether its self-priority is higher than that of the talker according to the priority information of the talker, if it is higher than that of the talker, executes the step 105, otherwise executes the step 107.

Step 105: The later entry UE determines to preempt the uplink, and sends the uplink access request to the network side.

Step 106: The network side determines whether the priority of the later entry UE is higher than that of the talker, if it is higher than that of the talker, the network side releases the uplink occupied by the talker and assigns the later entry UE the uplink; the later entry UE occupies the assigned uplink to talk;

Otherwise, the network side does not response to the uplink access request or sends an access failure message to the later entry UE.

For the purpose of implementing the determining procedure of the network side in this step, the later entry UE carries its self-priority when sending the uplink access request.

Step 107: The later entry UE ensures that the uplink cannot be preempted, the later entry UE demodulates the group call channel downlink and receives the voice on it.

When the later entry UE enters the trunking group with an establish group call and the uplink of this trunking group is free, i.e., the later entry UE receives the uplink free message sent repeatedly by the network side, the handling procedure is the same as the procedure in the prior art.

In accordance with this embodiment, the information message can not be sent repeatedly but sent on demand, i.e., when the network side detects a later entry UE, sending a downlink message once to the later entry UE, and this downlink message carries the priority information of the talker. The detecting procedure comprise: when the later entry UE enters the trunking group, sending an uplink message indicating the UE has entered the trunking group to the trunking group.

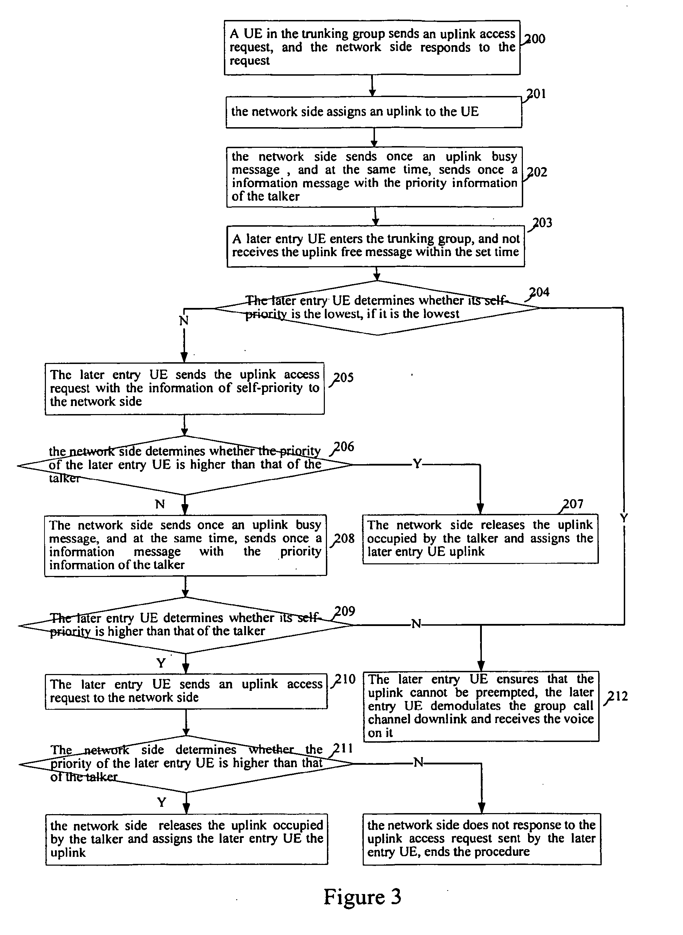

As shown in Figure 3, which is the flowchart of the second embodiment of the present invention, the steps of the embodiment comprise:
Step 200: The trunking group has established a group call, a UE in the trunking group sends an uplink access request, and the network side responds to the request.

Step 201: the network side assigns an uplink to the UE, and the UE occupies the assigned uplink as a talker.

Step 202: the network side sends once on the downlink, e.g., NCH, an uplink busy message , and at the same time, sends once a information message with the priority information of the talker.

All the UEs currently in the trunking group can compare their self-priorities with that of the talker, and determine accordingly whether the uplink access request is sent.

Step 203: A later entry UE enters the trunking group, and not receives the uplink free message within the set time.

The time pre-defined by the later entry UE is usually equal to or longer than the time interval of repeated transmission of the uplink free messages.

Step 204: The later entry UE determines whether its self-priority is the lowest, if it is the lowest, executing step 212; otherwise, that of the talker executing step 205.

Step 205: The later entry UE sends the uplink access request with the information of self-priority to the network side.

Step 206: After receiving the uplink access request, the network side determines according to the priority information of the later entry UE whether the priority of the later entry UE is higher than that of the talker, if it is higher than that of the talker, executing step 207; otherwise executing step 208.

Step 207: The network side releases the uplink occupied by the talker and assigns the later entry UE uplink; the later entry UE occupies the assigned uplink to talk.

Step 208: The network side sends once on the downlink, e.g., NCH, an uplink busy message, and at the same time, sends once a information message with the priority information of the talker.

The uplink busy message and the information message can be one downlink message, or two downlink messages sent at the same time or in order.

Step 209: The later entry UE determines according to the priority information of the talker whether its self-priority is higher than that of the talker, if it is higher than that of the talker, executing step 210, otherwise , executing step 212.

Step 210: The later entry UE ensures that the uplink can be preempt, and sends an uplink access request to the network side.

Step 211: The network side determines whether the priority of the later entry UE is higher than that of the talker, if it is higher than that of the talker, the network side releases the uplink occupied by the talker and assigns the later entry UE the uplink; the later entry UE occupies the assigned uplink to talk;

Otherwise, the network side does not response to the uplink access request sent by the later entry UE or sends an access failure message to the later entry UE.

For the purpose of implementing the determining procedure of the network side, the later entry UE carries its self-priority when sending the uplink access request.

Step 212: The later entry UE ensures that the uplink cannot be preempted, the later entry UE demodulates the group call channel downlink and receives the voice on it.

In accordance with this embodiment, the later entry UE in the trunking group with the established group call can send the uplink message to inform the network side that there is a later entry UE. In this case, the network side can directly perform steps 208 - 212.

When the later entry UE enters the trunking group with the established group call and the uplink of this trunking group is free, i.e., the later entry UE receives the uplink free message sent repeatedly by the network side , the handling procedure is the same as the procedure in the prior art.

By the solution as shown in Figures 2 or 3, the later entry UE in the trunking group with the established group call, not receiving the uplink free message, will not determine directly that the uplink cannot be preempted. However, the UE will further obtain the priority information of the talker, determines according to the priority information whether the priority of the talker is higher than its own configured priority, and then determines whether the uplink can be preempted, accordingly determines whether to send the uplink access request to the network side.

The foregoing description is only the preferred embodiments of this invention and is not to be used for limiting the protection scope of this invention. Any modification, equivalent substitution, improvement, etc., within the principle of this invention should be covered by the protection scope of this invention.

## Claims

1. A method of uplink preemption by a later entry User Equipment, UE, in a trunking group with an established group call, wherein the trunking group comprises a plurality of UEs with different priorities, the method comprising the steps of:
one of the UEs occupies an uplink of the trunking group as a talker, other UE is a listener, and the later entry UE enters the trunking group after the group call is established;
receiving (103), by the later entry UE, an information message with a priority information of the talker; and
determining (104), by the later entry UE, whether the priority of the later entry UE is higher than the priority of the talker according to the information message,
if the priority of the later entry UE is higher than the priority of the talker, determining the uplink can be preempted; otherwise, listening on the downlink.

2. The method according to Claim 1, wherein, the information message is sent repeatedly by the trunking group at a pre-defined time interval on the downlink.

3. The method according to Claim 2, further comprising,
receiving (103), by the later entry UE, an uplink busy message indicating the uplink being busy, wherein the uplink busy message is sent repeatedly by the trunking group at the pre-defined time interval.

4. The method according to Claim 3, wherein, the uplink busy message and the information message are sent in one downlink message.

5. The method according to Claim 1, wherein before the later entry UE receives an information message with a priority information of the talker, further comprising,
sending (205), by the later entry UE, an uplink message to the trunking group if the later entry UE does not receive a uplink free message;
wherein the information message is sent by the trunking group in response to the uplink message from the later entry UE.

6. The method according to Claim 5, wherein, the uplink message carries the priority information configured for the later entry UE.

7. The method according to Claim 6, before the trunking group sends the information message to the later entry UE, further comprising:
determining (206), by the trunking group, whether the priority of the later entry UE is higher than the priority of the talker according to the received priority information of the later entry UE,
if the priority of the later entry UE is higher than the priority of the talker, releasing (207) the uplink occupied by the talker and assigning the uplink for the later entry UE,
otherwise, sending (208) to the later entry UE the information message.

8. The method according to Claim 5, before the later entry UE sends the uplink message to the trunking group, further comprising:
determining (204), by the later entry UE, whether the priority of the later entry UE is the lowest in the trunking group;
if the priority of the later entry UE is the lowest, listening on (212) the downlink;
otherwise, sending (205) the uplink message to the trunking group.

9. The method according to Claim 1, after the later entry UE determines the uplink can be preempted, further comprising:
sending (105), by the later entry UE, an uplink access request to the trunking group;
releasing (106), by the trunking group, the uplink occupied by the talker after receiving the uplink access request, and assigning the uplink to the later entry UE.

10. The method according to Claim 9, wherein, the uplink access request carries the priority information configured for the later entry UE.

11. The method according to Claim 10, before the trunking group releases the uplink occupied by the talker, further comprising:
determining (106, 211), by the trunking group, whether the priority of the later entry UE is higher than the priority of the talker according to the received priority information of the later entry UE carried by the uplink access request,
if the priority of the later entry UE is higher than the priority of the talker, the trunking group releasing the uplink occupied by the talker;
otherwise, the trunking group not responding to the uplink access request or sending an access failure message to the later entry UE.

12. The method according to Claim 3 or 5, wherein the downlink is a Notification Channel, NCH.

13. A trunking system for uplink preemption, comprising:
a trunking group with an established group call, wherein the trunking group comprises a plurality of User Equipments, UEs, with different priorities, and wherein one of the UEs occupies an uplink of the trunking group as a talker, other UEs are listeners on the downlink, and wherein
the trunking group is adapted to send an information message with a priority information of the talker to the listener;
a later entry UE, wherein the later entry UE enters the trunking group after the group call is established, and wherein
the later entry UE is adapted to determine whether the priority of the later entry UE is higher than the priority of the talker according to the information message with the priority information of the talker, if the priority of the later entry UE is higher than the priority of the talker, the later entry UE is adapted to determine the uplink can be preempted; otherwise, the later entry UE is adapted to listen on the downlink.

14. The system according to Claim 13, wherein the trunking group is adapted to send repeatedly an information message on the downlink at a pre-defined time interval.

15. The system according to Claim 13, wherein
the later entry UE is further adapted to send an uplink message to the trunking group if the later entry UE does not receive an uplink free message sent repeatedly by the trunking group within the pre-defined time; and
the trunking group is adapted to send the information message to the later entry UE on the downlink after receiving the uplink message.

## Patentansprüche

1. Verfahren zur Aufwärtsstrecken-Voreinnahme durch ein später hereinkommendes Benutzergerät UE in einer Bündelungsgruppe mit einem hergestellten Gruppenanruf, wobei die Bündelungsgruppe mehrere UE mit verschiedenen Prioritäten umfasst, wobei das Verfahren die folgenden Schritte umfasst:
eines der UE belegt eine Aufwärtsstrecke der Bündelungsgruppe als ein Sprecher, ein anderes UE ist ein Zuhörer und das später hereinkommende UE tritt in die Bündelungsgruppe ein, nachdem der Gruppenanruf hergestellt ist;
Empfangen (103) einer Informationsnachricht mit einer Prioritätsinformation des Sprechers durch das später hereinkommende UE; und
Bestimmen (104) durch das später hereinkommende UE, ob die Priorität des später hereinkommenden UE höher als die Priorität des Sprechers ist, gemäß der Informationsnachricht,
wenn die Priorität des später hereinkommenden UE höher als die Priorität des Sprechers ist, Bestimmen, dass die Aufwärtsstrecke voreingenommen werden kann; andernfalls Zuhören auf der Abwärtsstrecke.

2. Verfahren nach Anspruch 1, wobei die Informationsnachricht wiederholt in einem vordefinierten Zeitintervall auf der Abwärtsstrecke durch die Bündelungsgruppe gesendet wird.

3. Verfahren nach Anspruch 2, ferner mit dem folgenden Schritt:
Empfangen (103) einer Aufwärtsstrecke-belegt-Nachricht, die angibt, dass die Aufwärtsstrecke belegt ist, durch das später hereinkommende UE, wobei die Aufwärtsstrecke-belegt-Nachricht wiederholt durch die Bündelungsgruppe in dem vordefinierten Zeitintervall gesendet wird.

4. Verfahren nach Anspruch 3, wobei die Aufwärtsstrecke-belegt-Nachricht und die Informationsnachricht in einer Abwärtsstreckennachricht gesendet werden.

5. Verfahren nach Anspruch 1, das, bevor das später hereinkommende UE eine Informationsnachricht mit einer Prioritätsinformation des Sprechers empfängt, ferner Folgendes umfasst:
Senden (205) einer Aufwärtsstreckennachricht durch das später hereinkommende UE zu der Bündelungsgruppe, wenn das später hereinkommende UE keine Aufwärtsstrecke-frei-Nachricht empfängt;
wobei die Informationsnachricht als Reaktion auf die Aufwärtsstreckennachricht von dem später hereinkommenden UE durch die Bündelungsgruppe gesendet wird.

6. Verfahren nach Anspruch 5, wobei die Aufwärtsstreckennachricht die für das später hereinkommende UE konfigurierte Prioritätsinformation führt.

7. Verfahren nach Anspruch 6, das, bevor die Bündelungsgruppe die Informationsnachricht zu dem später hereinkommenden UE sendet, ferner Folgendes umfasst:
Bestimmen (206) durch die Bündelungsgruppe, ob die Priorität des später hereinkommenden UE höher als die Priorität des Sprechers ist, gemäß der empfangenen Prioritätsinformation des später hereinkommenden UE,
wenn die Priorität des später hereinkommenden UE höher als die Priorität des Sprechers ist, Freigeben (207) der durch den Sprecher belegten Aufwärtsstrecke und Vergeben der Aufwärtsstrecke für das später hereinkommende UE,
andernfalls Senden (208) der Informationsnachricht zu dem später hereinkommenden UE.

8. Verfahren nach Anspruch 5, das, bevor das später hereinkommende UE die Aufwärtsstreckennachricht zu der Bündelungsgruppe sendet, ferner Folgendes umfasst:
Bestimmen (204) durch das später hereinkommende UE, ob die Priorität des später hereinkommenden UE die niedrigste in der Bündelungsgruppe ist;
wenn die Priorität des später hereinkommenden UE die niedrigste ist, Zuhören auf (212) der Abwärtsstrecke;
andernfalls Senden (205) der Aufwärtsstreckennachricht zu der Bündelungsgruppe.

9. Verfahren nach Anspruch 1, das, nachdem das später hereinkommende UE bestimmt, dass die Aufwärtsstrecke voreingenommen werden kann, ferner Folgendes umfasst:
Senden (105) einer Aufwärtsstreckenzugangsanforderung durch das später hereinkommende UE zu der Bündelungsgruppe;
Freigeben (106) der durch den Sprecher belegten Aufwärtsstrecke durch die Bündelungsgruppe nach dem Empfang der Aufwärtsstreckenzugangsanforderung und
Vergeben der Aufwärtsstrecke an das später hereinkommende UE.

10. Verfahren nach Anspruch 9, wobei die Aufwärtsstreckenzugangsanforderung die für das später hereinkommende UE konfigurierte Prioritätsinformation führt.

11. Verfahren nach Anspruch 10, das, bevor die Bündelungsgruppe die von dem Sprecher belegte Aufwärtsstrecke freigibt, ferner Folgendes umfasst:
Bestimmen (106, 211) durch die Bündelungsgruppe, ob die Priorität des später hereinkommenden UE höher als die Priorität des Sprechers ist, gemäß der durch die Aufwärtsstreckenzugangsanforderung geführten empfangenen Prioritätsinformation des später hereinkommenden UE,
wenn die Priorität des später hereinkommenden UE höher als die Priorität des Sprechers ist, gibt die Bündelungsgruppe die von dem Sprecher belegte Aufwärtsstrecke frei;
andernfalls antwortet die Bündelungsgruppe nicht auf die Aufwärtsstreckenzugangsanforderung oder sendet eine Zugang-erfolglos-Nachricht zu dem später hereinkommenden UE.

12. Verfahren nach Anspruch 3 oder 5, wobei die Abwärtsstrecke ein Notification Channel NCH ist.

13. Bündelungssystem zur Aufwärtsstrecken-Voreinnahme, umfassend:
eine Bündelungsgruppe mit einem hergestellten Gruppenanruf, wobei die Bündelungsgruppe mehrere Benutzergeräte UE mit verschiedenen Prioritäten umfasst und
wobei eines der UE eine Aufwärtsstrecke der Bündelungsgruppe als ein Sprecher belegt, andere UE Zuhörer auf der Abwärtsstrecke sind und wobei
die Bündelungsgruppe dafür ausgelegt ist, eine Informationsnachricht mit einer Prioritätsinformation des Sprechers zu dem Zuhörer zu senden;
ein später hereinkommendes UE, wobei das später hereinkommende UE in die Bündelungsgruppe eintritt, nachdem der Gruppenanruf hergestellt ist, und wobei das später hereinkommende UE dafür ausgelegt ist, gemäß der Informationsnachricht mit der Prioritätsinformation des Sprechers zu bestimmen, ob die Priorität des später hereinkommenden UE höher als die Priorität des Sprechers ist, und wenn die Priorität des später hereinkommenden UE höher als die Priorität des Sprechers ist, das später hereinkommende UE dafür ausgelegt ist zu bestimmen, dass die Aufwärtsstrecke voreingenommen werden kann; und andernfalls das später hereinkommende UE dafür ausgelegt ist, auf der Abwärtsstrecke zuzuhören.

14. System nach Anspruch 13, wobei die Bündelungsgruppe dafür ausgelegt ist, wiederholt in einem vordefinierten Zeitintervall eine Informationsnachricht auf der Abwärtsstrecke zu senden.

15. System nach Anspruch 13, wobei
das später hereinkommende UE ferner dafür ausgelegt ist, eine Aufwärtsstreckennachricht zu der Bündelungsgruppe zu senden, wenn das später hereinkommende UE nicht innerhalb der vordefinierten Zeit eine wiederholt durch die Bündelungsgruppe gesendete Aufwärtsstrecke-frei-Nachricht empfängt; und
die Bündelungsgruppe dafür ausgelegt ist, nach dem Empfang der Aufwärtsstreckennachricht die Informationsnachricht auf der Abwärtsstrecke zu dem später hereinkommenden UE zu senden.

## Revendications

1. Procédé de préemption de liaison montante par un Equipement Utilisateur, UE, à entrée tardive, dans un groupe à ressources partagées, avec un appel de groupe établi, le groupe à ressources partagées comprenant une pluralité d'UE aux priorités différentes, le procédé comprenant les étapes suivantes :
l'un des UE occupe une liaison montante du groupe à ressources partagées en tant que locuteur, un autre UE est un auditeur, et l'UE à entrée tardive entre dans le groupe à ressources partagées après l'établissement de l'appel de groupe ;
la réception (103), par l'UE à entrée tardive, d'un message d'information avec une information de priorité du locuteur ; et
la détermination (104), par l'UE à entrée tardive, si la priorité de l'UE à entrée tardive est supérieure ou non à la priorité du locuteur en fonction du message d'information ;
si la priorité de l'UE à entrée tardive est supérieure à la priorité du locuteur, la détermination que la préemption de la liaison montante est possible, sinon, l'écoute sur la liaison descendante.

2. Procédé selon la revendication 1, dans lequel le message d'information est envoyé de façon répétée par le groupe à ressources partagées à un intervalle de temps prédéfini sur la liaison descendante.

3. Procédé selon la revendication 2, comprenant en outre,
la réception (103), par l'UE à entrée tardive, d'un message de liaison montante occupée indiquant que la liaison montante est occupée, le message de liaison montante occupée étant envoyé de façon répétée par le groupe à ressources partagées à l'intervalle de temps prédéfini.

4. Procédé selon la revendication 3, dans lequel le message de liaison montante occupée et le message d'information sont envoyés dans un même message de liaison descendante.

5. Procédé selon la revendication 1, comprenant en outre, avant que l'UE à entrée tardive reçoive un message d'information avec une information de priorité du locuteur,
l'envoi (205) par l'UE à entrée tardive, d'un message de liaison montante au groupe à ressources partagées si l'UE à entrée tardive ne reçoit pas de message de liaison montante libre ;
dans lequel le message d'information est envoyé par le groupe à ressources partagées en réponse au message de liaison montante provenant de l'UE à entrée tardive.

6. Procédé selon la revendication 5, dans lequel le message de liaison montante porte l'information de priorité configurée pour l'UE à entrée tardive.

7. Procédé selon la revendication 6, comprenant en outre avant que le groupe à ressources partagées envoie le message d'information à l'UE à entrée tardive :
la détermination (206), par le groupe à ressources partagées, si la priorité de l'UE à entrée tardive est supérieure ou non à la priorité du locuteur en fonction de l'information de priorité reçue de l'UE à entrée tardive,
si la priorité de l'UE à entrée tardive est supérieure à la priorité du locuteur, la libération (207) de la liaison montante occupée par le locuteur et l'attribution de la liaison montante à l'UE à entrée tardive,
sinon, l'envoi (208) du message d'information à l'UE à entrée tardive.

8. Procédé selon la revendication 5, comprenant en outre avant que l'UE à entrée tardive envoie le message de liaison montante au groupe à ressources partagées :
la détermination (204), par l'UE à entrée tardive, si la priorité de l'UE à entrée tardive est ou non la plus basse dans le groupe à ressources partagées ;
si la priorité de l'UE à entrée tardive est la plus basse, l'écoute (212) sur la liaison descendante ;
sinon, l'envoi (205) du message de liaison montante au groupe à ressources partagées.

9. Procédé selon la revendication 1, comprenant en outre après que l'UE à entrée tardive détermine que la préemption de la liaison montante est possible :
l'envoi (105), par l'UE à entrée tardive, d'une demande d'accès à la liaison montante au groupe à ressources partagées ;
la libération (106), par le groupe à ressources partagées, de la liaison montante occupée par le locuteur après avoir reçu la demande d'accès à la liaison montante, et
l'attribution de la liaison montante à l'UE à entrée tardive.

10. Procédé selon la revendication 9, dans lequel la demande d'accès à la liaison montante porte l'information de priorité configurée pour l'UE à entrée tardive.

11. Procédé selon la revendication 10, comprenant en outre avant que le groupe à ressources partagées libère la liaison montante occupée par le locuteur :
la détermination (106, 211), par le groupe à ressources partagées, si la priorité de l'UE à entrée tardive est supérieure ou non à la priorité du locuteur en fonction de l'information de priorité reçue de l'UE à entrée tardive portée par la demande d'accès à la liaison montante,
si la priorité de l'UE à entrée tardive est supérieure à la priorité du locuteur, la libération par le groupe à ressources partagées de la liaison montante occupée par le locuteur ;
sinon, la non-réponse par le groupe à ressources partagées à la demande d'accès à la liaison montante ou l'envoi par le groupe à ressources partagées d'un message d'échec d'accès à l'UE à entrée tardive.

12. Procédé selon la revendication 3 ou 5, dans lequel la liaison descendante est un Canal de Notification, NCH.

13. Système à ressources partagées pour préemption de liaison montante, comprenant :
un groupe à ressources partagées avec un appel de groupe établi, le groupe à ressources partagées comprenant une pluralité d'Equipements Utilisateurs, UE, aux priorités différentes, et dans lequel l'un des UE occupe une liaison montante du groupe à ressources partagées en tant que locuteur, d'autres UE sont des auditeurs sur la liaison descendante et dans lequel le groupe à ressources partagées est adapté pour envoyer un message d'information avec une information de priorité du locuteur à l'auditeur ;
un UE à entrée tardive, l'UE à entrée tardive entrant dans le groupe à ressources partagées après que l'appel de groupe est établi, et l'UE à entrée tardive étant adapté pour déterminer si la priorité de l'UE à entrée tardive est supérieure ou non à la priorité du locuteur en fonction du message d'information comportant l'information de priorité du locuteur, si la priorité de l'UE à entrée tardive est supérieure à la priorité du locuteur, l'UE à entrée tardive est adapté pour déterminer que la préemption de la liaison montante est possible ; sinon, l'UE à entrée tardive est adapté pour écouter sur la liaison descendante.

14. Système selon la revendication 13, dans lequel le groupe à ressources partagées est adapté pour envoyer de façon répétée le message d'information sur la liaison descendante à un intervalle de temps prédéfini.

15. Système selon la revendication 13, dans lequel,
l'UE à entrée tardive est adapté en outre pour envoyer un message de liaison montante au groupe à ressources partagées si l'UE à entrée tardive ne reçoit pas de message de liaison montante libre envoyé de façon répétée par le groupe à ressources partagées dans le temps prédéfini ; et
le groupe à ressources partagées est adapté pour envoyer le message d'information à l'UE à entrée tardive sur la liaison descendante après avoir reçu le message de liaison montante.
